# EUROPEAN PATENT APPLICATION

(11) **EP 1 381 190 A1**
(43) Date of publication of application: **14.01.2004**
(21) Application number: 02360207.1
(22) Date of filing: 12.07.2002
(51) Int. Cl.: H04L 12/46, H04L 29/08

(54) **Method for accessing a virtual private network resource based on uniform resource identifiers**

(71) Applicant: ALCATEL, 75008 Paris (FR)
(72) Inventor: Westerhuis, Frans, 2000 Antwerpen (BE); Vermeulen, Steven, 2280 Grobbendonk (BE); Handekyn, Koen, 9000 Gent (BE)
(74) Representative: Brose, Gerhard

(57) **Abstract**

The invention relates to combine virtual private network specific information, down to layer 2 of OSI with the standard uniform resource identifier concept, as well as integrating and enhancing the network access procedure. It relates to a method for accessing a virtual private network (VPN) resource based on VPN information contained in a uniform resource identifier (URI) comprising the steps of extracting said VPN information out of the URI, establishing access to a VPN corresponding to said VPN information, if not already established, and requesting the by the URI identified resource. Further it relates to an adapter, a client terminal, an encoding application server, a network access server, a uniform resource identifier, corresponding markup languages and transfer protocols, a user interface, and computer software products for accessing virtual private network resources based on URIs.

## Description

### BACKGROUND OF THE INVENTION

### Field of the Invention

The present invention relates to providing access to resources in a virtual private network by an extended notion of a uniform resource locator. More particularly, the present invention relates to a method, an adapter, a client terminal, an encoding application server, a network access server, a uniform resource identifier, a transfer protocol, a markup language, a user interface, and computer software products for accessing a virtual private network (VPN) resource based on a uniform resource identifier (URI).

### Background

### Click through

Banner advertisement is the internal billboard placed on the Information Superhighway. Banners usually appear at the top of web pages. Banner advertising is one of the most well known and visible forms of advertising on the Internet today. They increase the visibility of the product or service is advertised, same like a magazine or TV advertisement.
When a banner advertisement is clicked on, and the user is taken through to the advertiser web site this is termed a click-through. The banner advertisement contains a short text or graphical message to attract the viewer to click on it and be swiftly transported to that particular web site.
Example of an advertisement click-through might be
http://advertisment.com/clickthrouah?url=http://product.com/article/?id=1234

When the user clicks on this URL, he/she will first access the advertisement web site, e.g. for marketing and statistical purposes, that will transparently forward him/her to the product web-site, showing the product information of the article with id=1234.

### Private Networks

In a nutshell, a virtual private network (VPN) is a private network that is configured within a public network. Carriers have been building VPNs that appear to be private national or international networks to their customers when they are, in fact, sharing backbone trunks with other customers. VPNs feature the security of a private network via access control and encryption, while taking advantage of the economies of scale and built-in management facilities of large public networks.
The explosive growth of the Internet and the increase in telecommuting, corporate branch offices, and a mobile work force is revolutionizing business-to-business communications. The need to share information with employees, partners and customers worldwide is driving many organizations to deploy VPN technology over public Internet Protocol (IP) networks such as the Internet.
The ability to guarantee the privacy and protection of data is of the utmost importance when deploying services over the Internet where points of illegal entry can threaten sensitive communications. A secure VPN is a communications network that is secured by encryption and authentication, and layered on existing IP networks such as the Internet, or through a service provider's network. To combat security issues, the Internet Engineering Task Force (IETF) has developed the IP Security (IPSec) protocol suite. This set of IP extensions, which are based on modern cryptographic technologies, offer strong data authentication and privacy guarantees by securing the network, rather than just the applications. Basic IP-VPN security services include private network tunneling through the IP backbone and data encryption. IP-VPN operators also offer authentication proxying, centrally managed firewall functions, undesirable URL blocking, etc. Access to such a VPN is typically provided by dedicated network access servers. VPNs can be built over ATM, frame relay and X.25 technologies. A current trend for carriers is to deploy Internet VPNs, IP-VPNs.

### ZUSATZBLATT

### 19 -Zusatzliche Vertreter

KNECHT Ulrich Karl (AV 38298)
SCHMIDT Werner (AV 38298)
VILLINGER Bernhard (AV 38299)
BROSE Gerhard (AV 38299)
KUGLER Hermann (AV 38299)
MENZIETTI Domenico (AV 38299)
RAUSCH Dr. Gabriele (AV 38299)
SCHÄTZLE Albin (AV 38299)
SCHULTENKAMPER Johannes (AV 38299)
URLICHS Stefan (AV 38299)

### Network Access System

To enter a network a portal, is needed. Such a portal offers a broad array of resources and services. The first access portals were online services, such as AOL, that provided access to the Internet.

An example of an access portal is the Alcatel 5742 Personalized Service Selector (PSS), an software product that enables Digital Subscriber Line (DSL) access service providers to deliver value-added IP services to end users. The PSS is targeted to DSL access/service providers, who own an IP gateway.

Such a personalized and captive access portal facilitates the selection of and access to different services, e.g. VPNs or providers. Those services include Internet access via an Internet Service Provider (ISP), log on to corporate network, video on demand, interactive gaming, software on demand, etc. Especially the PSS facilitates the selection of and the access to IP Virtual Private Networks, e.g. corporate network, ISP, etc.

### Resource Identifier

Addressing resources in networks, is well known since the Internet and browsers became public. The term URL, an abbreviation of Uniform Resource Locator, stands for a standardized way of specifying addresses of web pages, files, newsgroups, and even email users, e.g. http://www.alcatel.de.

Technically, the correct term is URI, for Uniform Resource Identifier. The World Wide Web Consortium provides an overview of materials related to addressing, accessible via the URI
http://www.w3.org/Addressing/
The Internet Engineering Task Force provides standardization and drafts respectively at
http://www.ietf.org/
A Uniform Resource Identifier is the generic set of all names/addresses that are short strings that refer to resources within one network. Uniform Resource Locator is an informal term (no longer used in technical specifications) associated with popular URI schemes, e.g. http:, ftp:, mailto:, etc. In this context an other term appears, Uniform Resource Name. That is either a URI that has an institutional commitment to persistence, availability, etc. or a particular scheme, e.g. urn:, specified by RFC2141 and related documents, intended to serve as persistent, location-independent, resource identifiers.

### Technical Problem

However, services like advertisements, www services, intranet services, applications, etc. offered in access portals like the Alcatel 5742 PSS, are often located in different IP VPNs. The state of the art resource identification provide no identification mechanism to access a resource from outside an IP VPN. The end-user first has to connect to the right VPN, before able to access the services.

From a user's perspective it would be nice to access a VPN via entering e.g. a URI in a browser, or following a hyper link using an already existing connection or forcing a connection establishment. This access feature is called in the following click-trough access, according to the above described advertising technique.

### BRIEF DESCRIPTION OF THE INVENTION

The central idea is to combine network/VPN specific information, down to layer 2 of OSI with the standard uniform resource identifier concept, as well as integrating the network access procedure.

This is archived by the invented **Uniform Resource Identifier** (URI) comprising a part for identifying a virtual private network where a resource is located, a part for the access to said virtual private network, and a part for identifying said resource; As well as the invented **Method** for accessing a virtual private network (VPN) resource characterized in using a uniform resource identifier (URI) having VPN information comprising the steps of
- extracting said VPN information out of the URI
- establishing access to a VPN corresponding to said VPN information, if not already established, and
- requesting the resource identified by the URI.

It is part of the invention that the URI might identify a virtual private network syntactically by an authority access part or a query part.

It is a further part of the invention that the method is realized by **Client Terminal**, or alternatively, an **Adapter**, an **encoding (web)Application Server**, or a **Network Access Server**, where the devices for accessing network resources using an URI having VPN information for accessing a VPN resource comprising
- an interpreter or decoder for extracting a VPN information out of a URI
- a connector for establishing access to a VPN corresponding to said VPN information, and
- a requestor for requesting the resource identified by the URI.

To be able to communicate the URI is used in transfer protocols, e.g. http and markup languages, e.g. HTML, SGML, XML, etc. Hence there are further embodiments of the invention concerning **Transfer Protocol** and **Markup Language** extensions.

A transfer protocol for encoding, decoding, transmitting, and receiving data is necessary, comprising uniform resource identifiers comprising a part for identifying a virtual private network where a resource is located, a part for identifying the access to said virtual private network, and a part for identifying said resource. This transfer protocol according might be **Hyper Text Transfer Protocol** (http).

URls having VPN information will also be used in markup languages for structuring a document's character data into logical components that can then be named and referred. Hence the markup language comprising uniform resource identifiers comprising a part for identifying a virtual private network where a resource is located, a part for identifying the access to said virtual private network, and a part for identifying said resource. The preferred markup languages are **Hyper Text Markup Language (HTML)**, **Extensible Hyper Text Markup Language (XHTML)**, and **Extensible Markup Language** Specification **(XML)**.

It is another embodiment of the invention to enhance a **User Interface** making the extended URls accessible and usable to a end-user.

It is another part of the invention that a **User Interface** for accessing a VPN resource using an URI having VPN information comprising means for specifying said URI, e.g. hyper links, text fields, etc. and means for interactively guiding through a network access procedure, e.g. authentication, authorization, etc.
It is yet another part of the invention that the **User Interface** optionally comprising depicting means for showing the accessed VPNs and access paths as well as accessible VPNs and optional access paths with their characteristics, e.g. quality of service, cost. security level, etc.).

The method is implemented by a corresponding hardware or software. Yet another embodiment of the invention is a C**omputer Software Product** for accessing a VPN resource using an URI having VPN information with components for extracting VPN information out of the URI, and establishing access to a VPN corresponding to the VPN information. And by a computer software product comprising components for requesting and/or receiving the by the URI identified resource.

### OBJECTS AND ADVANTAGES OF THE INVENTION

Accordingly, it is an object and advantage of the present invention to provide a simple, fast, and user-friendly click-through access to services located in different VPNs. This will decrease the threshold of consuming services.

Another advantage of the present invention is that the concept is in line with the already established click through / URL user metaphor. And the concept embeds well in established transport protocols and the markup languages

Hence, yet another advantage of the present invention is that the notation of URls can be used to associate VPNs with (web) services, e.g. in web sites.

These and many other objects and advantages of the present invention will become apparent to those of ordinary skill in the art from a consideration of the drawings and ensuing description.

### BRIEF DESCRIPTION OF THE FIGURES

**Figure. 1** is a schematic drawing of a prior art access network context and especially the components used in an access network scenario.
**Figure. 2** is a screen shot of a prior art personalized selection server client application.
**Figure. 3** is a screen shot of a Netscape browser, requesting a user authentication for accessing a virtual private network, relating to the invention.
**Figure. 4** is a schematic drawing of a terminal client centric adapter VPN-URI processing architecture, relating to the invention.
**Figure. 5** is a schematic drawing of a terminal client centric application server VPN-URI processing architecture, relating to the invention.
**Figure. 6** is a schematic drawing of a network access server centric VPN-URI processing architecture, relating to the invention.

### DETAILED DESCRIPTION OF THE INVENTION

Those of ordinary skill in the art will realize that the following description of the present invention is illustrative only and is not intended to be in any way limiting. Other embodiments of the invention will readily suggest themselves to such skilled persons from an examination of the within disclosure.

### Access Terminology

Digital Subscriber Lines (DSL) carry data at high speeds over standard copper telephone wires.
A Customer Premises Equipment (CPE) refers to equipment that resides at the end-users location (home or office), e.g. DSL modems, DSL gateways, etc.
A Digital Subscriber Line Access Multiplexer (DSLAM) is an equipment located in the central office that provides DSL services.
A Personalized Service Selector (PSS) enables a DSL access/service provider to deliver DSL services.
A Broadband Network Access Server (BNAS) is a server that enables an independent service provider (ISP) to provide connected customers with Internet access.
A Service Management Center (SMC) is carrier class management platform that enables network service providers (NSPs) to establish a port wholesaling service.

An authentication, authorization and accounting Server (AAA Server) is a system to control what computer resources users have access to and to keep track of the activity of users over a network.

### Web Data Presentation Terminology

Hyper Text Transfer Protocol (HTTP) is the protocol by which web clients (browsers) and web servers communicate. It is stateless, meaning that it does not maintain a conversation between a given client and server, but it can be manipulated using scripting to appear as if state is being maintained. Do not confuse HTML (Markup language for our browser-based front ends), with HTTP (protocol used by clients and servers to send and receive messages over the Web).
Graphical User Interface is what an end-user sees and interacts with when operating (interacting with) a software application. Sometimes referred to as the "front-end" of an application. HTML is the GUI standard for web-based applications.
Link - A link is a relationship between two resources. HTML links usually connect HTML documents together in this fashion (called a hyperlink), but links can link to any type of resource (documents, pictures, sound and video files, etc.) capable of residing at a Web address (URI).
A Markup is comprised of several "special characters" that are used to structure a document's character data into logical components that can then be labeled (named) so that they can be manipulated more easily by a software application.
A Markup Language is used to structure a document's character data into logical components, and "name" them in a manner that is useful. These labels (element names) provide either formatting information about how the character data should be visually presented (for a word processor or a web browser, for instance) or they can provide "semantic" (meaningful) information about what kind of data the component represents. Markup languages provide a simple format for exchanging text-based character data that can be understood by both humans and machines.
A resource is anything addressable via a URI. Examples of resources are: documents, files, pictures, sounds, videos and databases.

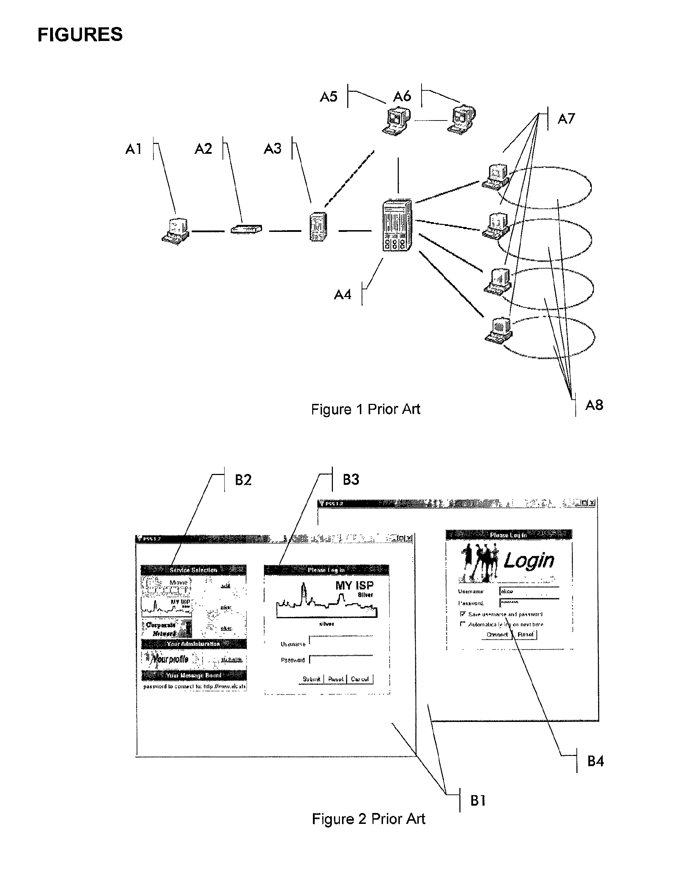

**Figure. 1** shows a commonly used the access network topology, a terminal client A1, a CPE A2, a DSLAM A3, a BNAS A4, with a PSS A5 and a SMC A6, NSP equipment A7, and multiple networks A8.

The terminal client A1 is connected via the CPE, e.g. an DSL modem with the DSLAM A3 multiplexing multiple subscriber lines for the BNAS A4 and the PSS A5. The PSS enables an end-user access control over the BNAS A4, instructing the BNAS A4 using dedicated NSP equipment A7, e.g. an AAA server, etc., for accessing the networks A8. The DSLAM A3 and the BNAS A4 together build an IP gateway. The accessed networks A7 might be public like the Internet or private like a corporate network. The PSS A5 is managed by the SMC A6.

**Figure. 2** shows two windows of a PSS client B1 on the terminal client A1. The first PSS client window contains a service selection option B2 and a login panel B3 of "MY ISP". The second PSS client window contains a login panel B4 for a VPN.
The PSS client user interface enables an end-user to choose a provider and/or an network, e.g. a virtual private network or the Internet. At the same time it provides a user interface for authentication B3, B4.

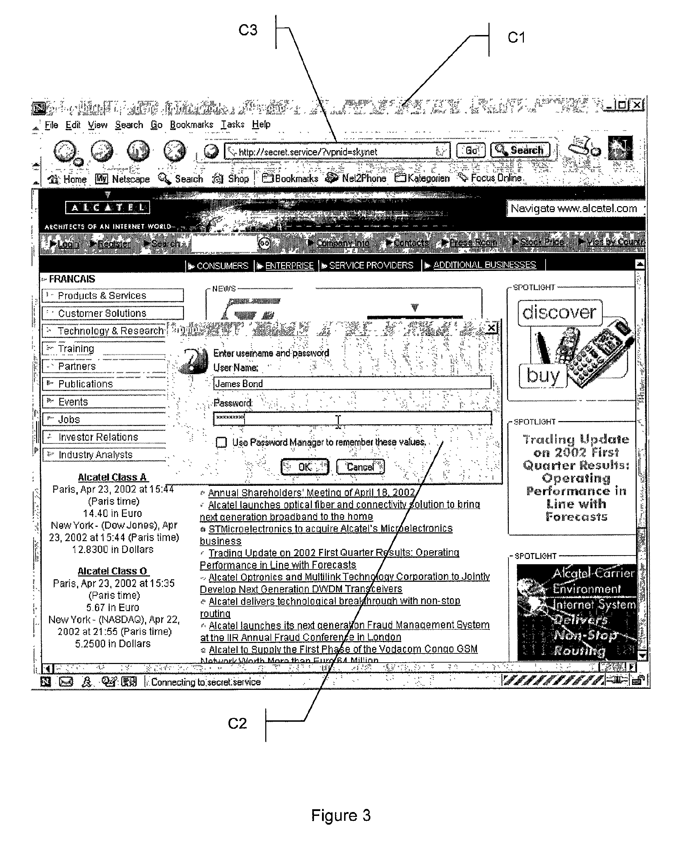

**Figure. 3** shows a navigator window of a Netscape browser C1. The window contains a text area C3 for search terms, key words, or web addresses. It contains the virtual private network uniform resource identifier (VPN-URI)
httn://secret.service/?vnnid--skvnet
identifying the private network "skynet", and within that network the site "secret.service/". Furthermore a pop-up window C2 is shown, asking for a user authentication to allow access.

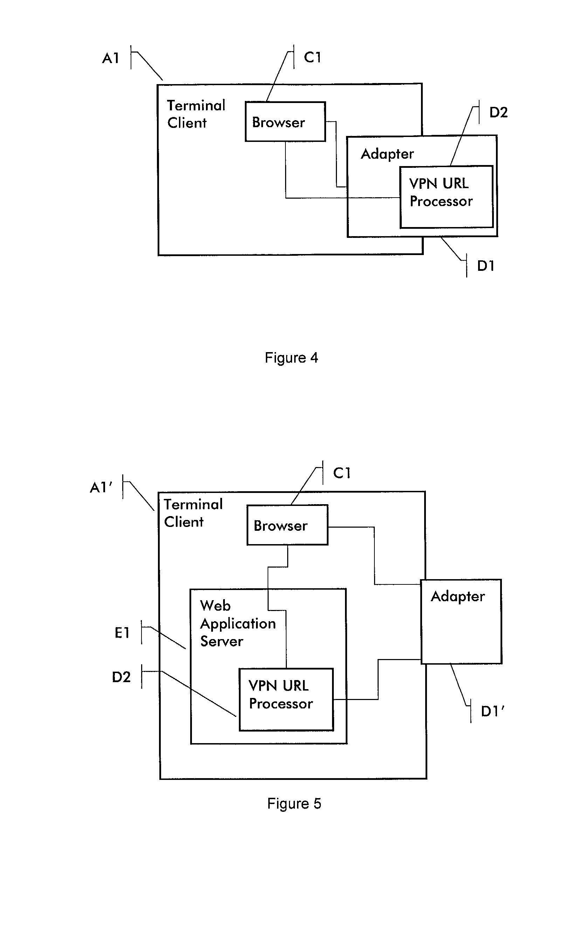

**Figure. 4** shows a schematic drawing of the terminal client A1 and the browser C1. The terminal client A1 is connected via an adapter D1 containing a VPN-URI processor D2.
The browser provides a VPN-URI to the VPN-URI processor D2. The VPN-URI processor is in charge to establish the corresponding VPN connection, if not already established, and to request an authentication, if required. When the VPN connection is established the browser receives and transmits as usual resources identified e.g. by uniform resource identifiers. For non VPN-URIs the browser C1. The adapter D1 provides therefore the networking interface.

Note that the adapter D2 in this figure do not necessarily coincide with the CPE hardware A2 mentioned in Figure 1. The adapter D2 might be for instance an operating system component or a VPN-URI decoder component for the CPE hardware A2.

**Figure. 5** shows a schematic drawing of the terminal client A1' and the browser C1. The terminal client A1' comprises a web application server E1 that contains the VPN-URI processor D2. The VPN-URI processor D2 as well as the browser C1 is connected with an adapter D1'.
The local web application server E1 decodes the VPN-URI received from the browser C1, and the VPN-URI processor D2 instructs the adapter D1' to establish the corresponding connection. When the connection is established, either the browser C1 can access directly VPN resources by using the adapter, or the web application server is enabled to serve requested VPN resources to the browser (client) C1 via the adapter D1' using the established connection.

Following the illustrating use case mentioned in the background part, the shown solutions solve the stated problem. The mechanism encodes VPN information in uniform resource locators (uniform resource identifiers) similar to the advertisement click-through mechanism mentioned above. The technique according to the invention enhances the advertisement click-trough by enabling a network change and connection establishment.
Using the URI according to the invention, it is possible to extend accordingly markup languages, e.g. Hyper Text Markup Language (HTML), and the respective transfer protocols, e.g. http.

Using the extensions would enable a end-user clicking on a VPN information enhanced link, e.g. a hyper text reference carrying a VPN-URI in a HTML coded portal page, the end-user is immediately transparently connected to the associated VPN. Such an hyper text reference might look like
<a href = "http://secret.service/?vpnid=skynet"> Secret Service Network </a>

To access VPN resources might require an authentication, authorization, and accounting procedure, e.g. implemented by VPN logon procedure to set-up a new connection, where after the requested service is provided in that VPN. In case where the end-user is already connected to the associated VPN the service/resource is provided immediately by that VPN.

A (software) component will process the VPN information included in the link. This component will interact with the VPN network access server to reach to the corresponding VPN. When the connection to VPN is established the actual resource request could be retrieved. This software component can be deployed on a client terminal itself or a server, e.g. DSL modem.

In a client centric solution the client terminal processes URI encoded VPN accesses the click-through application, e.g. by running an application web server locally that is able to encode the VPN information and to establish a connection. Then the uniform resource identifier might look like
http://localhost/clickthrough ? vpnid=skynet ?"url=http://advertisment.com/clickthrouah?url=h ttp://product.com/article/?id=1234".
Where "vpnid=skynet" a name value pair to specify a particular VPN to be accessed, and the advertisement click-through:
http://advertisment.com/clickthrough?url=http://product.com/article/?id=1234 is proceed as described in the Background part.

In this example, the browser will first access the localhost, where localhost is an identifier for the local running web server. The localhost will trigger the click-through software component. This component will process the VPN information included in the URI, e.g. vpnid=skynet, and will interact with a VPN network access server to connect to the corresponding VPN. When the connection to VPN has been established, the actual resource request can be executed. Hence, in the example, a user will access the advertisement web site, for marketing and statistical purposes, that will transparently forward her to the product web-site, showing the product information of article id=1234, although the site is located in the skynet VPN.

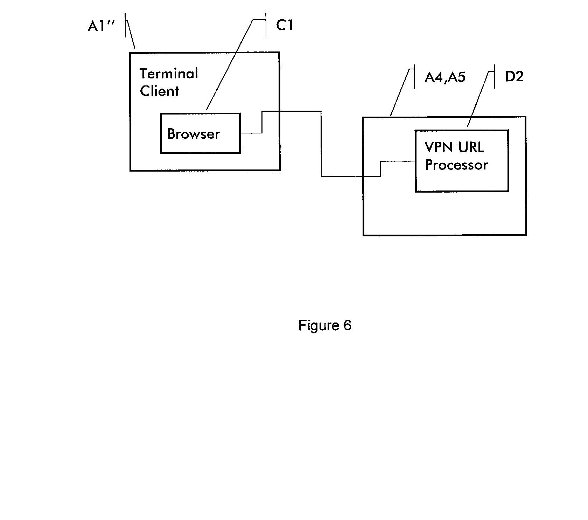

**Figure. 6** shows a schematic drawing of a terminal client A1" comprising the browser C1, and it shows network access equipment, e.g. a personalizes service selector A5 or a broadband network access server A4, in general a network access server (NAS) comprising a VPN-URI processor D2.

From a standardization and a technical point of view it is advantageous to extend the hyper text transfer protocol and the uniform resource identifier enabling the handling of arbitrary VPN topologies. Currently an IP address is decoded from a URI. This invention extends this concept of identifying a location in a IP network by identifying virtual private networks.

When the current URI syntax and semantic is extended in this way unifying the access to VPNs, the VPN-URI processing might be implemented as a network access server functionality.

Currently a uniform resource identifier (URI) is defined as a string of characters for identifying an abstract or physical resource within a network. URI are characterized by the following definitions:

Uniformity: it allows different types of resource identifiers to be used in the same context, even when the mechanisms used to access those resources may differ; it allows uniform semantic interpretation of common syntactic conventions across different types of resource identifiers; it allows introduction of new types of resource identifiers without interfering with the way that existing identifiers are used; and, it allows the identifiers to be reused in many different contexts, thus permitting new applications or protocols to leverage a pre-existing, large, and widely-used set of resource identifiers. The resource is the conceptual mapping to an entity or set of entities, not necessarily the entity which corresponds to that mapping at any particular instance in time.

Identifier: is an object that can act as a reference to something that has identity. In the case of URI, the object is a sequence of characters with a restricted syntax. Having identified a resource, a system may perform a variety of operations on the resource, as might be characterized by such words as 'access', 'update', 'replace', or 'find attributes'.

The syntax notation and common element use two conventions to describe and define the syntax of URIs. The first, called the layout form, is a general description of the order of components and component separators, as in
<first>/<second>;<third>?<fourth>

The second convention is a BNF-like grammar is used to define the formal URI syntax, see
http://www. ietf.org/rfc/rfc822.txt
(Backus-Naur notation (more commonly known as BNF or Backus-Naur Form) is a formal mathematical way to describe a language, which was developed by John Backus (and possibly Peter Naur as well) to describe the syntax of the Algol 60 programming language. A formal definition could be found in any introductory book about formal languages or compilers.)

The URI syntax is dependent upon the scheme. In general, absolute URI are written as follows:
<scheme>:<scheme-specific-part>

This generic URI syntax consists of a sequence of four main components:
<scheme>://<authority><path>?<query>

URI that are hierarchical in nature use the slash "/" character for separating hierarchical components.

The authority component is typically defined by an Internet-based server or a scheme-specific registry of naming authorities.
authority = server | reg_name

The authority component is preceded by a double slash "//" and is terminated by the next slash "/", question-mark "?", or by the end of the URI. Within the authority component, the characters ";", ":", "@", "?", and "/" are reserved.

URI schemes that involve the direct use of an IP-based protocol to a specified server on the Internet use a common syntax for the server component of the URI's scheme-specific data:
<userinfo>@<host>:<port>
where <userinfo> may consist of a user name and, optionally, scheme-specific information about how to gain authorization to access the server. The parts "<userinfo>@" and ":<port>" may be omitted.
server = [ [ userinfo "@" ] hostport ]

Further details can be found in e.g. http:llwww.ietf.org/rfc/rfc2396.txt

As illustrated in the example above one might embed the VPN part into the query part.

## Claims

1. A Method for accessing a virtual private network (VPN) resource **characterized in** using a uniform resource identifier (URI) having VPN information comprising the steps of
- extracting said VPN information out of the URI (C3)
- establishing access to a VPN (A8) corresponding to said VPN information, if not already established, and
- requesting the resource identified by the URI (C3).

2. A Uniform Resource Identifier comprising a part for identifying a virtual private network where a resource is located, a part for identifying the access to said virtual private network, and a part for identifying said resource.

3. The Uniform Resource Identifier according to Claim 2 where the part for identifying a virtual private network syntactically is an authority access path.

4. The Uniform Resource Identifier according to Claim 2 where the part for identifying a virtual private network syntactically is an query part.

5. A Client Terminal (A1, A1', A1") for accessing network resources **characterized in that** said client terminal comprising
- an interpreter (D2) for extracting a VPN information out of a URI (C3)
- a connector (D2) for establishing access to a VPN (AS) corresponding to said VPN information, and
- a requestor (C1, D2) for requesting the resource identified by the URI (C3)
using said URI having VPN information for accessing a VPN resource.

6. An Adapter (D1) for establishing network connections **characterized in that** said adapter comprising
- a decoder (D2) for extracting a VPN information out of a URI (C3)
- a connector (D2) for establishing access to a VPN (A8) corresponding to said VPN information, and
- a requestor (C1, D2) for requesting the resource identified by the URI (C3)
using said URI having VPN information for accessing a VPN resource.

7. An Encoding Application Server (E1) for accessing a VPN resource **characterized in that** said encoding application server comprising
- an interpreter (D2) for extracting a VPN information out of a URI (C3)
- a connector (D2) for establishing access to a VPN (A8) corresponding to said VPN information, and
- a requestor (C1, D2) for requesting the resource identified by the URI (C3)
using said URI having VPN information for accessing a VPN resource.

8. An Network Access Server (A4, A5) as an access portal for accessing a VPN **characterized in that** said network access server comprising
- an interpreter (D2) for extracting a VPN information out of a URI (C3)
- a connector (D2) for establishing access to a VPN (A8) corresponding to said VPN information, and
- a requestor (C1, D2) for requesting the resource identified by the URI (C3)
using said URl having VPN information for accessing a VPN resource.

9. A Transfer Protocol for encoding, decoding, transmitting, and receiving data **characterized in** comprising uniform resource identifiers comprising a part for identifying a virtual private network where a resource is located, a part for identifying the access to said virtual private network, and a part for identifying said resource.

10. The Transfer Protocol according to Claim 9 where the transfer protocol is Hyper Text Transfer Protocol (http).

11. A Markup Language for structuring a document's character data into logical components that can then be named and referred **characterized in that** said markup language comprising uniform resource identifiers comprising a part for identifying a virtual private network where a resource is located, a part for identifying the access to said virtual private network, and a part for identifying said resource.

12. The Markup Language according to Claim 11 where the markup language is Hyper Text Markup Language (HTML) or Extensible Hyper Text Markup Language (XHTML).

13. The Markup Language according to Claim 1 1 where the markup language is Extensible Markup Language Specification (XML).

14. A User Interface (C1, C2, C3) for accessing a VPN resource using an URI having VPN information comprising means for specifying said URI (links, text fields, etc.) and means for interactively guiding through a network access procedure (authentication, authorization, and accounting).

15. The User Interface (C1, C2, C3) according to Claim 13. comprising depicting means for showing the accessed VPNs with their characteristics (quality of service, cost. etc.).

16. The User Interface (C1, C2, C3) according to Claim 13. comprising depicting means for showing the access paths with their characteristics (quality of service, cost. etc.).

17. The User Interface (C1, C2, C3) according to Claim 13. comprising depicting means for showing the accessible VPNs with their characteristics (quality of service, cost. etc.).

18. The User Interface (C1, C2, C3) according to Claim 13. comprising depicting means for showing the optional access paths for a VPN are shown with their characteristics (quality of service, cost. etc.) .

19. A Computer Software Product for accessing a VPN resource using an URI having VPN information according to Claim 5 with components for
- extracting said VPN information out of the URI, and
- establishing access to a VPN corresponding to said VPN information.

20. A Computer Software Product for accessing a VPN resource using an URI having VPN information according to Claim 5 comprising components for requesting and/or receiving the by the URI identified resource.
